# DEMANDE DE BREVET EUROPEEN

(11) **EP 3 100 870 A1**
(43) Date de publication de la demande: **07.12.2016**
(21) Numéro de dépôt: 16168303.2
(22) Date de dépôt: 04.05.2016
(51) Int. Cl.: B60B 5/02, B60B 7/00, B60B 7/04

(54) **ENJOLIVEUR ET ROUE A PIECE THERMOFUSIBLE**

(30) Priorité: 04.06.2015 FR 1555093
(71) Demandeur: Peugeot Citroën Automobiles SA, 78140 Vélizy-Villacoublay (FR)
(72) Inventeur: PALPACUER, ERIC, 75013 PARIS (FR)

(57) **Abrégé**

Un enjoliveur (4) comprend un disque (41) pourvu d'au moins une ouverture (43), adaptée à une circulation d'air apte à un refroidissement de pièces disposées au niveau d'une roue (3), et au moins une pièce thermofusible (42) d'occultation de ces ouvertures. Cette occultation empêche la circulation d'air à travers les ouvertures, et les pièces thermofusibles sont adaptées à se décomposer et à dégager ainsi les ouvertures au-delà d'une température critique, avantageusement de l'ordre de 100 °C. Cet enjoliveur permet d'éviter des endommagements en cas de surchauffe accidentelle. Roue et véhicule, en particulier véhicule automobile, munis d'un tel enjoliveur.

## Description

La présente invention concerne un enjoliveur de roue, ainsi qu'une roue et un véhicule, en particulier un véhicule automobile, correspondants. L'invention porte notamment sur un enjoliveur aérodynamique.

Les enjoliveurs, ou chapeaux de roues, sont couramment utilisés pour recouvrir les faces externes de roues assurant la liaison au sol d'un véhicule. Ils permettent ainsi d'assurer une fonction esthétique, en recouvrant des parties de roues en tôle conçues essentiellement comme fonctionnelles et le plus souvent dépourvues de style.

Les enjoliveurs classiques ont généralement la forme de pièces circulaires comprenant de multiples ajourages répartis périodiquement autour d'un axe, et réalisés selon des critères prioritairement esthétiques. Ces ajourages permettent une bonne circulation d'air entre la roue et l'extérieur, et contribuent ainsi à éviter des échauffements excessifs au niveau des roues, en particulier lors de phases de freinage. Ils ont cependant l'inconvénient de pénaliser les performances aérodynamiques du véhicule, en impactant défavorablement sa traînée.

C'est pourquoi ont été développés des enjoliveurs aérodynamiques, conçus de manière à réduire la traînée du véhicule, en particulier grâce à la forme et au positionnement des ajourages. Bien que permettant le passage de flux d'air, ces enjoliveurs tendent à réduire ces flux à des intensités relativement faibles, juste suffisantes pour refroidir suffisamment les freins lors de phases d'échauffement. Or il peut arriver que des pics de sollicitations des freins entraînent un échauffement plus élevé qu'à l'habitude et requièrent un refroidissement accru. Les enjoliveurs aérodynamiques risquent alors d'être inadaptés à ces situations extrêmes, et de conduire à des détériorations des freins ou d'autres éléments voisins.

Pour réunir les avantages des deux types d'enjoliveurs, en termes à la fois d'aérodynamique et de refroidissement, des enjoliveurs à éléments mobiles ont été proposés, dits « enjoliveurs à géométrie variable ». Ces derniers permettent de manière circonstanciée d'obturer ou de libérer des ouvertures permettant le passage d'air à travers les enjoliveurs, par exemple au moyen de volets articulés. Dans la plupart des réalisations, l'actionnement des éléments d'obturation est piloté par la température au voisinage de ces éléments, via un alliage à mémoire de forme sensible à la température. Dans d'autres solutions, leur fermeture est provoquée par une pression exercée sous l'effet de la vitesse du véhicule, tandis que leur ouverture est assurée par un dispositif ressort exerçant une force opposée à la fermeture.

A titre d'exemple, le document brevet FR-2998507-A1 au nom de la présente demanderesse (inventeurs E. Palpacuer et T. Brelet) divulgue un enjoliveur de roue à géométrie variable, dans lequel un dispositif de ventilation comprend une aube propre à se déformer de façon réversible par effet de voilage thermique. Au-delà d'une température critique, dans une des mises en oeuvre, l'aube se déforme par torsion autour d'une fibre neutre, s'écartant ainsi du disque de l'enjoliveur en augmentant l'ouverture de ventilation.

Les enjoliveurs à géométrie variable sont aptes à offrir un très bon compromis entre réduction de traînée du véhicule et garantie de refroidissement des freins. Le problème qu'ils posent est qu'en cas de défaillance du système, notamment de dysfonctionnement d'un actionnement d'ouverture de volets, il existe un risque de surchauffe des freins. Ce risque est d'autant plus significatif par rapport à d'autres types d'enjoliveurs tels que ceux aérodynamiques, que ces dispositifs ont une position fermée qui n'est pas adaptée à de tels échauffements.

La présente invention a notamment pour but d'éviter les inconvénients des systèmes connus, en proposant un enjoliveur rendant possibles, dans ses meilleures réalisations, à la fois une bonne tenue aérodynamique et un refroidissement efficace et fiable des freins. L'invention vise en particulier un enjoliveur à géométrie variable, pouvant être apte à supporter des défaillances de mécanismes d'ouverture en évitant des endommagements de freins.

Plus généralement, l'invention a pour but un enjoliveur permettant, en configurations appropriées, d'obtenir à coûts réduits une amélioration du sillage latéral des roues de véhicule, donc une réduction d'émissions de dioxyde de carbone et des économies d'énergie, tout en pouvant faire face à des surchauffes dues notamment à des sollicitations exceptionnelles des freins.

A cet effet, l'invention a pour objet un enjoliveur comprenant un disque configuré pour être monté en face extérieure d'une roue, ce disque étant pourvu d'au moins une ouverture adaptée à une circulation d'air apte à un refroidissement de pièces disposées au niveau de cette roue.

Selon l'invention, l'enjoliveur comprend au moins une pièce thermofusible d'occultation de cette/ces ouverture(s), l'occultation empêchant la circulation d'air à travers cette/ces ouverture(s), adaptée à se décomposer et à dégager ainsi cette/ces ouverture(s) au-delà d'une température critique.

Ainsi, il est rendu possible de bénéficier d'un fonctionnement aérodynamique particulièrement efficace en fonctionnement normal, tout en parant aux risques de dégradations dus à un échauffement excessif dans des situations inhabituelles, telles qu'une sollicitation excessive des freins.

Dans une réalisation préférée, appelée ci-dessous « à distribution angulaire », les ouvertures sont constituées d'ajourages de sécurité répartis avec un pas angulaire constant et les pièces thermofusibles sont constituées de volets thermofusibles obstruant respectivement ces ajourages.

Avantageusement, les ajourages de sécurité et les volets thermofusibles associés à ces ajourages sont alors respectivement au nombre de huit.

De préférence, la/les pièce(s) thermofusible(s) est/sont formée(s) d'une matière ayant une température de fusion de l'ordre de 100° C.

Dans une réalisation particulière, elle(s) est/sont formée(s) en polyéthylène.

Selon une réalisation préféré, le disque de l'enjoliveur est pourvu d'au moins une fenêtre de circulation d'air en plus de cette/ces ouverture(s), et comprend au moins un système d'obturation ayant une position ouverte et une position fermée. La position ouverte permet une circulation d'air à travers cette/ces fenêtre(s) et la position fermée empêche au moins partiellement cette circulation d'air. Ce(s) système(s) d'obturation est/sont configuré(s) pour adopter sélectivement la position ouverte de façon à permettre un refroidissement des pièces disposées au niveau de la roue, et la position fermée de façon à permettre une efficacité aérodynamique améliorée.

Cette réalisation est particulièrement avantageuse, en ce que dans ses configurations les plus pertinentes, elle permet de retrouver les qualités combinées des enjoliveurs à géométrie variable, à savoir efficacité aérodynamique et refroidissement adapté, tout en prémunissant contre les effets délétères de dysfonctionnements des mécanismes de circulation d'air lors d'échauffements.

Dans un mode particulier impliquant la réalisation préférée à distribution angulaire, ces fenêtres sont constituées d'ajourages d'aération contrôlée par le(s) système(s) d'obturation, ces ajourages étant répartis avec un pas angulaire constant. De plus, les ajourages de sécurité sont pratiqués en alternance angulaire avec les ajourages d'aération contrôlée.

Selon une réalisation spécifique de ce mode, les ajourages de sécurité du disque étant répartis selon une première circonférence ayant un premier diamètre et les ajourages d'aération contrôlée du disque étant répartis selon une seconde circonférence ayant un second diamètre, le second diamètre est supérieur au premier diamètre.

L'invention concerne également une roue pour véhicule, en particulier pour véhicule automobile, comprenant un enjoliveur conforme à l'une quelconque des réalisations spécifiées plus haut.

Un autre objet de l'invention est un véhicule, en particulier un véhicule automobile, comprenant des roues associées à au moins un dispositif de refroidissement au niveau de ces roues en cas d'échauffement dû à des éléments de freinage au voisinage des roues.

Selon l'invention, au moins une de ces roues est conforme à la définition ci-dessus.

L'invention sera mieux comprise et d'autres caractéristiques et avantages apparaîtront plus clairement à la lumière de la description ci-après d'exemples de réalisation, donnée à titre non limitatif en référence aux dessins annexés dans lesquels :
- la Figure 1 est une vue en perspective d'une roue munie d'un enjoliveur conforme à l'invention, dans un premier exemple de réalisation ;
- la Figure 2 est une vue en perspective de l'enjoliveur du premier exemple de réalisation représenté sur la Figure 1 ;
- la Figure 3A est une vue de face de l'enjoliveur de la Figure 2 ;
- la Figure 3B est une vue latérale en coupe AA de l'enjoliveur de la Figure 2 ;
- la Figure 4 montre un agrandissement partiel de l'enjoliveur de la Figure 3B, dans une zone B d'un ajourage avec pièce d'occultation ;
- la Figure 5 est une vue en perspective d'une roue munie d'un enjoliveur conforme à l'invention en cours d'assemblage, dans un deuxième exemple de réalisation correspondant à un enjoliveur à géométrie variable, avec des obturateurs en position fermée ;
- la Figure 6 représente la roue de la Figure 5 avec les obturateurs en position ouverte.

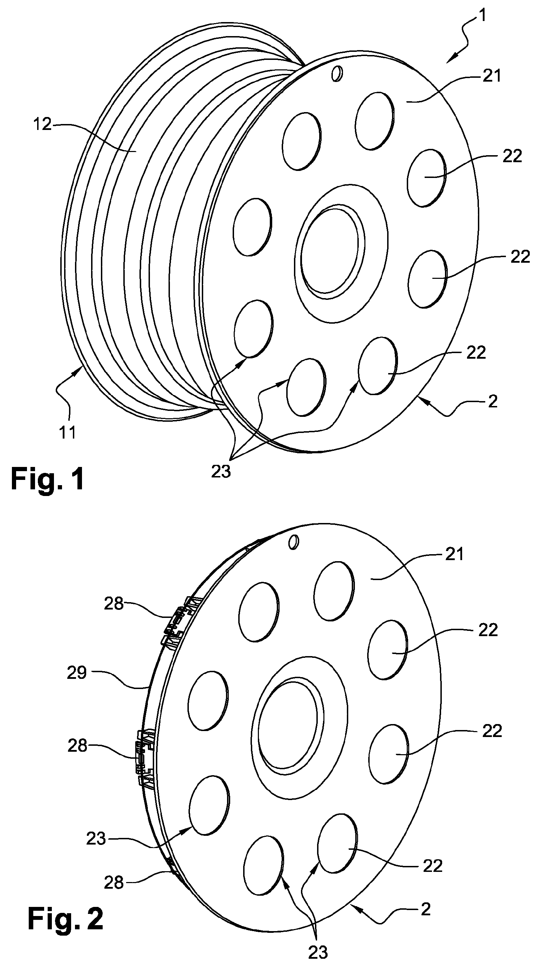

Une roue 1 conforme à un premier exemple de réalisation, représentée sur la **Figure 1****,** comprend une jante 11 et un enjoliveur 2. La jante 11, de forme sensiblement cylindrique, comprend une surface périphérique extérieure 12 classiquement configurée pour recevoir un pneumatique. Elle est solidaire d'un voile (non représenté) de la roue 1 qui permet de centrer et fixer cette roue 1 sur un moyeu.

L'enjoliveur 2 comporte un disque 21 par exemple en polyamide. Il est monté sur la jante 11 au moyen d'éléments de fixation élastique 28 et d'un ressort circulaire de maintien 29 positionnable à travers ces éléments 28, visibles sur la **Figure 2**. Dans le mode représenté, les éléments 28 (par exemple au nombre de huit) sont répartis selon une périodicité circulaire en périphérie de face interne du disque 21. Ils permettent de maintenir l'enjoliveur 2 à la jante 11 par fixations élastiques des éléments 28 et du ressort 29 contre un rebord intérieur (non représenté) de la jante 11, en coopération avec une saillie sensiblement circulaire de ce rebord. Dans des variantes, d'autres systèmes de fixation de l'enjoliveur 2 à la roue 1 sont utilisés, tels que des pattes circonférentielles de montage.

Le disque 21 est percé d'ajourages 23. Ces derniers, en l'espèce circulaires et au nombre de huit, sont répartis périodiquement autour d'un axe de symétrie du disque 21. Chacun des ajourages 23 est muni d'une pièce thermofusible d'occultation 22, ci-après dénommée « occulteur », empêchant en fonctionnement normal la circulation d'air à travers cet ajourage 23. Le comportement aérodynamique d'un véhicule équipé de roues identiques à la roue 1 est ainsi remarquablement efficace en comparaison de roues avec enjoliveurs ajourés de structure classique.

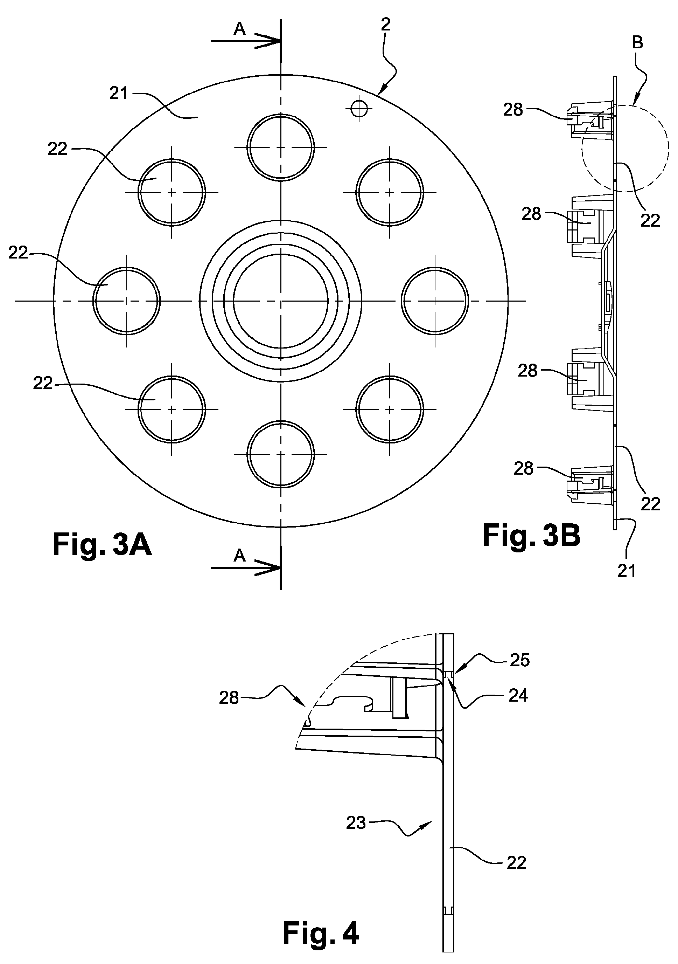

Les occulteurs 22, visibles plus précisément sur les **Figures 3A et 3B** et la **Figure 4**, sont (dans des modes préférés) composés d'une matière ayant une température de fusion de l'ordre de 100 degrés Celsius, telle que du polyéthylène. Dans des variantes, cette matière est choisie parmi du chlorure de polyvinyle ou PVC (sigle anglais pour « polyvinyl chloride »), de l'acrylonitrile butadiène styrène ou ABS, et des bioplastiques.

Les occulteurs 22 sont fixés sur le disque 21 par une technique telle que notamment surmoulage, collage, soudure ou assemblage ressort (également dénommé « clippage »). Dans l'exemple représenté (voir Fig. 4), cette dernière technique est utilisée par emboîtement élastique de courtes nervures circulaires périphériques 24 des occulteurs 22 dans des rainures circulaires 25 correspondantes en bordures des ajourages 23.

En cas de surchauffe accidentelle excédant un fonctionnement normal, les occulteurs 22 ou une partie d'entre eux se décomposent, et dégagent ainsi les ajourages 23 associés. La circulation d'air en résultant permet alors un refroidissement, notamment des freins.

Ce premier mode de réalisation, qui par contraste avec les enjoliveurs les plus fréquents n'autorise pas le passage de flux d'air à travers le disque d'enjoliveur, est particulièrement adapté à des véhicules à échauffement faible de freinage en fonctionnement normal, tels que des véhicules électriques ou très légers. Il peut également être pertinent en combinaison avec des systèmes de refroidissement alternatifs de freins, tels en particulier que reposant sur des écopes d'air périphériques de roue.

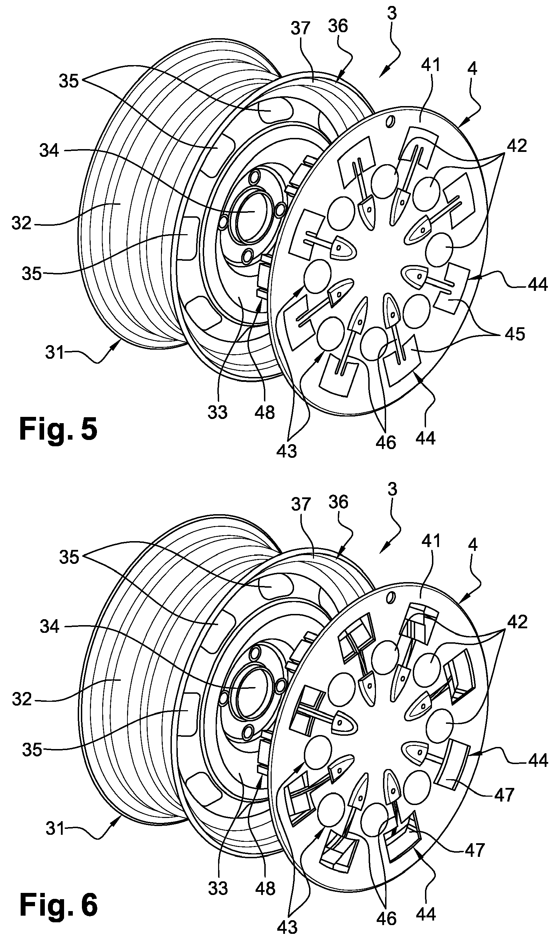

Dans un deuxième exemple de réalisation représenté aux **Figures 5 et 6**, une roue 3 comprend une jante 31, un voile 33 solidaire de la jante 31 et un enjoliveur 4 à géométrie variable. La jante 31, de forme sensiblement cylindrique, comprend une surface périphérique extérieure 32 classiquement configurée pour recevoir un pneumatique.

Le voile 33 forme une partie centrale galbée pourvue d'un alésage central 34, adapté à une fixation de la roue 3 sur un moyeu. Le voile 33 dispose par ailleurs de multiples percées périphériques 35, prévues à la fois pour un allégement de roue et une circulation traversante de flux d'air.

L'enjoliveur 4 comprend un disque 41 par exemple en polyamide, et des éléments de fixation élastique 48 permettant son maintien à la jante 31. Les éléments 48 (ici au nombre de six) sont répartis selon une périodicité circulaire en périphérie de face interne du disque 41. De façon similaire au premier mode de réalisation, ils permettent de maintenir l'enjoliveur 4 à la jante 31 par fixations élastiques de ces éléments 48 et d'un ressort circulaire de maintien (non représenté) contre un rebord intérieur 36 de la jante 31, en coopération avec une saillie 37 sensiblement circulaire de ce rebord 36.

Le disque 41 est percé de fenêtres 47 de circulation d'air, munies respectivement d'obturateurs 44. Ces fenêtres 47 sont réparties périodiquement autour d'un axe de symétrie du disque 41, à proximité de périphérie du disque 41. Elles sont en l'espèce sensiblement rectangulaires et allongées perpendiculairement à des directions radiales du disque 41, et au nombre de huit. Chacun des obturateurs 44 inclut un volet pivotant 45 d'obturation de la fenêtre 47 associée, et un bras 46 assurant le maintien et la mobilité du volet 45 par des mouvements de flexion vers le voile 33 et d'extension vers le disque 41. Un actionneur (non représenté) en face interne du disque 41 est configuré pour agir sur le volet 45 et le bras 46 de façon à positionner le volet 45 en position ouverte ou fermée. Le volet 45 empêche le passage de l'air à travers la fenêtre 47 en position fermée et autorise des flux d'air en position ouverte.

Dans l'exemple représenté, l'actionneur comprend une tige à lame bimétallique, en alliage à mémoire de forme (par exemple en Nickel-Titane), se contractant en présence de températures élevées et se détendant en l'absence de telles températures de façon à respectivement ouvrir et fermer le volet 45.

Le disque 41 est également percé d'ajourages 43, en l'espèce circulaires et au nombre de huit, répartis périodiquement autour d'un axe de symétrie du disque 41. Chacun des ajourages 43 est muni d'une pièce thermofusible d'occultation 42 ou occulteur, empêchant en fonctionnement normal la circulation d'air à travers cet ajourage 43, de façon similaire au premier exemple de réalisation.

Les ajourages 43 sont pratiqués en alternance avec les fenêtres 47, selon un rayon de circonférence inférieur par rapport aux fenêtres 47 dans l'exemple représenté.

Ainsi, même en cas de défaillance des obturateurs 44 empêchant un refroidissement correct des freins en cas de surchauffe, la fusion d'un ou plusieurs des occulteurs 42 permet de garantir le passage de l'air, et en conséquence le refroidissement requis.

Dans des variantes de réalisations d'enjoliveurs à géométrie variable, les ajourages avec pièces thermofusibles d'occultation sont combinées avec d'autres systèmes à parties mobiles de variations d'ouvertures, reposant par exemple sur des aubes se déformant par effet de voilage thermique, ou sur des volets maintenus ouverts par mécanisme ressort et fermés par pression exercée sous l'effet de la vitesse.

## Revendications

1. Enjoliveur (2, 4) comprenant un disque (21, 41) configuré pour être monté en face extérieure d'une roue (1, 3), ledit disque étant pourvu d'au moins une ouverture (23, 43) adaptée à une circulation d'air apte à un refroidissement de pièces disposées au niveau de ladite roue, **caractérisé en ce que** ledit enjoliveur (2, 4) comprend au moins une pièce thermofusible (22, 42) d'occultation de ladite au moins une ouverture (23, 43), ladite occultation empêchant la circulation d'air à travers ladite ouverture, adaptée à se décomposer et à dégager ainsi ladite ouverture au-delà d'une température critique.

2. Enjoliveur (2, 4) selon la revendication 1, **caractérisé en ce que** ladite au moins une ouverture (23, 43) est constituée d'ajourages de sécurité répartis avec un pas angulaire constant et ladite au moins une pièce thermofusible (22, 42) est constituée de volets thermofusibles obstruant respectivement lesdits ajourages.

3. Enjoliveur (2, 4) selon la revendication 2, **caractérisé en ce que** lesdits ajourages de sécurité (23, 43) et lesdits volets thermofusibles (22, 42) associés auxdits ajourages sont respectivement au nombre de huit.

4. Enjoliveur (2, 4) selon l'une quelconque des revendications précédentes, **caractérisé en ce que** ladite au moins une pièce thermofusible (22, 42) est formée d'une matière ayant une température de fusion de l'ordre de 100° C.

5. Enjoliveur (2, 4) selon l'une quelconque des revendications précédentes, **caractérisé en ce que** ladite au moins une pièce thermofusible (22, 42) est formée en polyéthylène.

6. Enjoliveur (4) selon l'une quelconque des revendications précédentes, **caractérisé en ce que** ledit disque (41) est pourvu d'au moins une fenêtre de circulation d'air (47) en plus de ladite au moins une ouverture (43), et comprend au moins un système d'obturation (44) ayant une position ouverte et une position fermée, la position ouverte permettant une circulation d'air à travers ladite fenêtre (47) et la position fermée empêchant au moins partiellement ladite circulation d'air, ledit système d'obturation (44) étant configuré pour adopter sélectivement la position ouverte de façon à permettre un refroidissement desdites pièces disposées au niveau de ladite roue (4), et la position fermée de façon à permettre une efficacité aérodynamique améliorée.

7. Enjoliveur (4) selon les revendications 2 et 6, **caractérisé en ce que** ladite au moins une fenêtre est constituée d'ajourages d'aération (47) contrôlée par ledit au moins un système d'obturation (44), qui sont répartis avec un pas angulaire constant, et **en ce que** lesdits ajourages de sécurité (43) sont pratiqués en alternance angulaire avec lesdits ajourages d'aération contrôlée (47).

8. Enjoliveur (4) selon la revendication 7, **caractérisé en ce que** les ajourages de sécurité (43) dudit disque (41) étant répartis selon une première circonférence ayant un premier diamètre et les ajourages d'aération contrôlée (47) dudit disque étant répartis selon une seconde circonférence ayant un second diamètre, le second diamètre est supérieur au premier diamètre.

9. Roue (1, 3) pour véhicule, en particulier pour véhicule automobile, **caractérisée en ce qu'**elle comprend un enjoliveur (2, 4) conforme à l'une quelconque des revendications précédentes.

10. Véhicule, en particulier véhicule automobile, comprenant des roues (1, 3) associées à au moins un dispositif de refroidissement au niveau desdites roues en cas d'échauffement dû à des éléments de freinage au voisinage desdites roues,
**caractérisé en ce qu'**au moins une desdites roues est conforme à la revendication 9.
